# EUROPEAN PATENT APPLICATION

(11) **EP 4 717 945 A1**
(43) Date of publication of application: **01.04.2026**
(21) Application number: 23938567.7
(22) Date of filing: 23.10.2023
(51) Int. Cl.: F16F 1/387

(54) **BUSH**

(30) Priority: 22.05.2023 JP 2023084077
(71) Applicant: Prospira Corporation, Kanagawa prefecture 212-0013 (JP)
(72) Inventor: TOKUHASHI, Fumiaki, Kawasaki city, Kanagawa 212-0013 (JP); YAMAMURA, Kazuo, Kawasaki city, Kanagawa 212-0013 (JP); HIROHATA, Kento, Kawasaki city, Kanagawa 212-0013 (JP)
(74) Representative: V.O.
(86) International application number: PCT/JP2023/038213
(87) International publication number: WO 2024/241605

(57) **Abstract**

The present invention aims to provide a bush that can suppress the wear of an elastic body due to repeated input in a perpendicular-to-axis broaching direction while maximizing degrees of freedom in designing the bush. A bush according to the present invention includes an outer cylinder, an inner cylinder, and an elastic body placed between the outer cylinder and the inner cylinder. The elastic body includes a broached part penetrating in an axial direction. A plate is placed between the outer cylinder and the broached part in a perpendicular-to-axis broaching direction. Part of the elastic body is located between the outer cylinder and the plate.

## Description

### Technical Field

The present invention relates to a bush, particularly a trailing arm bush used for vehicles.

### Background Art

In order to reduce vibration, a vehicle uses a bush including an outer cylinder, an inner cylinder, and an elastic body placed between the outer cylinder and the inner cylinder (see Patent Literature 1 for example). Generally, a bush having an inner cylinder and an outer cylinder includes a direction, as the perpendicular-to-axis direction, entirely forming an elastic body (hereinafter also referred to as the "perpendicular-to-axis solid direction") and a direction, as the perpendicular-to-axis direction, partly providing a broached part (hereinafter also referred to as the "perpendicular-to-axis broaching direction").

### Citation List

### Patent Literature

Patent Literature 1: Japanese Unexamined Patent Application Publication No. 2020-204339

### Summary of Invention

### Technical Problem

A large input, if repeatedly applied in the perpendicular-to-axis broaching direction, may wear the elastic body attached to the inner cylinder and outer cylinder, exposing the metal and generating abnormal noise due to contact.

As vehicle performances become increasingly complex, bushes used for vehicles are also required to exhibit the intended spring characteristics in respective directions. However, it is difficult to achieve the spring characteristics of the bush in two perpendicular-to-axis directions, such as the perpendicular-to-axis solid direction and the perpendicular-to-axis broaching direction. It is also necessary to achieve other performance characteristics such as durability in addition to the spring characteristics. It is difficult to deal with these problems by designing only shapes of the elastic body, for example.

When inputs are repeatedly applied in the perpendicular-to-axis broaching direction, a favorable solution is to maximize degrees of freedom in designing shapes of the inner cylinder and the elastic body in order to easily achieve the spring characteristics in two perpendicular-to-axis directions.

The present invention aims to provide a bush that can suppress the wear of an elastic body due to repeated input in a perpendicular-to-axis broaching direction while maximizing degrees of freedom in designing the bush.

### Solution to Problem

The present invention is summarized as follows.
(1) A bush includes an outer cylinder, an inner cylinder, and an elastic body placed between the outer cylinder and the inner cylinder. The elastic body includes a broached part penetrating in an axial direction. A plate is placed between the outer cylinder and the broached part in a perpendicular-to-axis broaching direction. Part of the elastic body is located between the outer cylinder and the plate.
(2) In the bush according to item (1), the elastic body is made of rubber.

### Advantageous Effects of Invention

The present invention is able to provide a bush that can suppress the wear of an elastic body due to repeated input in a perpendicular-to-axis broaching direction while maximizing degrees of freedom in designing the bush.

### Brief Description of Drawings

FIG. 1 is an end view of a bush according to an embodiment of the present invention, viewed in the axial direction.
FIG. 2 is a cross-sectional view of FIG. 1.
FIG. 3 is another cross-sectional view of FIG. 1.
FIG. 4 is a diagram illustrating an application example of the bush.
FIG. 5 is a diagram illustrating an evaluation result of the embodiment.

### Description of Embodiments

Hereinafter, one embodiment of the present invention will be described in detail with reference to the drawings.

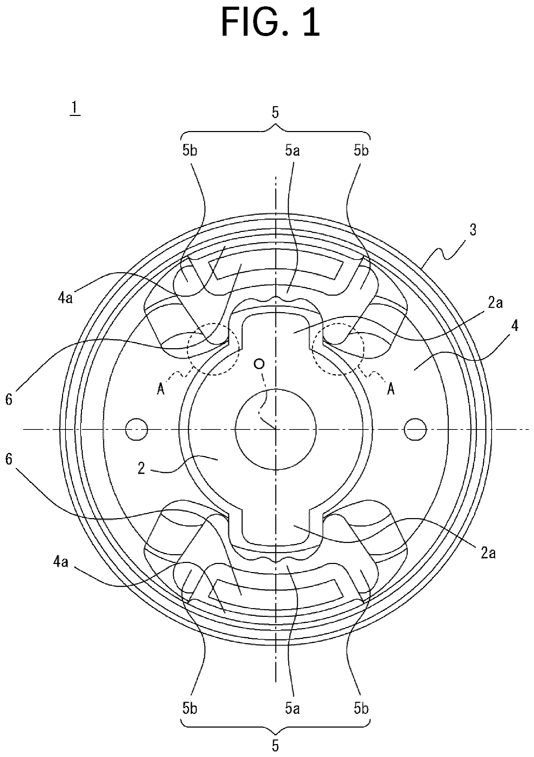

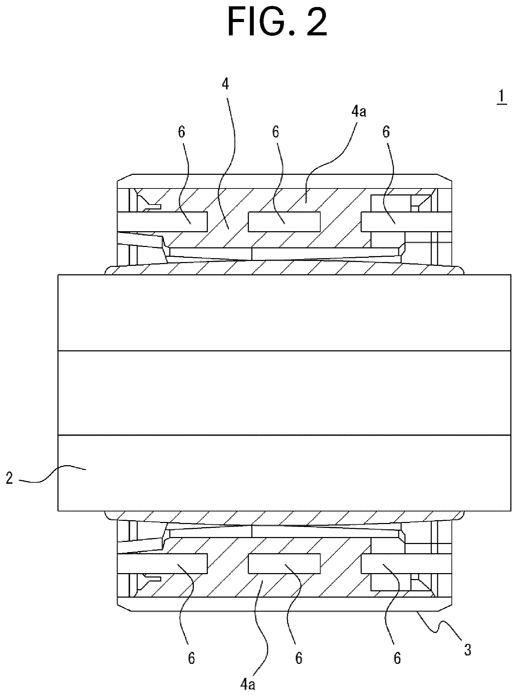

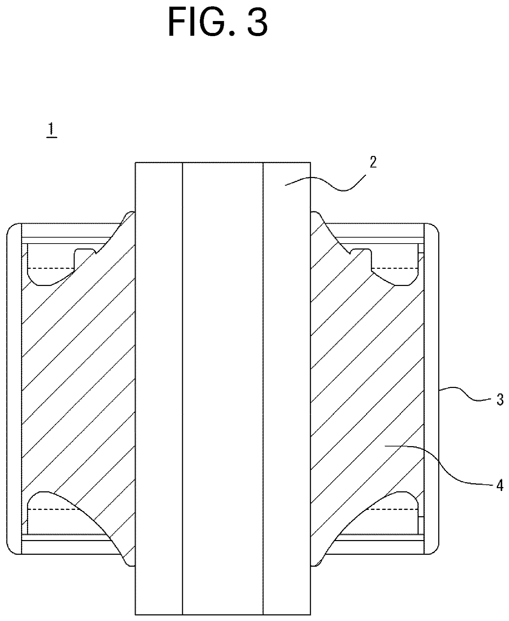

FIG. 1 is an end view of a bush according to an embodiment of the present invention, viewed in the axial direction. FIG. 2 is a cross-sectional view of FIG. 1. FIG. 3 is another cross-sectional view of FIG. 1. In this specification, the "perpendicular-to-axis direction" signifies a direction perpendicular to the axial direction of the bush.

As illustrated in FIGS. 1 to 3, a bush 1 according to the present embodiment includes an inner cylinder 2, an outer cylinder 3, and an elastic body 4 placed between the inner cylinder 2 and the outer cylinder 3.

According to the present embodiment, the inner cylinder 2 and the outer cylinder 3 are concentrically placed around axis O as the center in a cross-sectional view perpendicular to the axial direction. According to the present embodiment, the inner cylinder 2 is made of metal. Specifically, the inner cylinder 2 can be made of carbon steel or aluminum alloy, for example. According to the present embodiment, the outer cylinder 3 is made of metal. Specifically, the outer cylinder 3 can be made of carbon steel or aluminum alloy, for example.

According to the present embodiment, the elastic body 4 is made of rubber. The elastic body 4 can also be made of elastic materials other than rubber. The elastic body 4 elastically connects the inner cylinder 2 and the outer cylinder 3.

According to the present embodiment, the elastic body 4 is formed of a broached part (void) 5 penetrating in the axial direction. In this example, the broached part 5 is provided at two locations in the vertical direction in the drawing, one above the inner cylinder 2 and one below the same.

In the illustrated example, the broached part 5 includes a wavelike slit part 5a extending in an approximately circumferential direction, and a hole part 5b extending from each end of the slit part 5a in an approximately perpendicular-to-axis direction. The slit part 5a extends in a wave-like manner and can suppress abnormal noise caused by the crushed slit part 5a in contact with a convex part 2a.

In the bush 1 according to the present embodiment, a plate 6 is placed between the outer cylinder 3 and the broached part 5 in the perpendicular-to-axis broaching direction. The plate 6 is favorably made of a metal such as steel. Part 4a of the elastic body 4 is located between the outer cylinder 3 and the plate 6.

The following describes the effects of the bush 1 according to the present embodiment.

In the bush 1 according to the present embodiment, the plate 6 is placed between the outer cylinder 3 and the broached part 5 in the perpendicular-to-axis broaching direction. Part 4a of the elastic body 4 is located between the outer cylinder 3 and the plate 6. It is possible to reduce the sense of shock in response to input in the perpendicular-to-axis broaching direction and prevent the generation of abnormal noise between metals due to the wear of the elastic body such as rubber attached to the inner cylinder 2 and the outer cylinder 3.

In the bush 1 according to the present embodiment, the inner cylinder 2 includes the convex part 2a protruding in the perpendicular-to-axis broaching direction. In this example, the inner cylinder 2 includes two convex parts 2a, one protruding upward in the drawing and the other protruding downward in the drawing. In the illustrated example, the convex part 2a is shaped to gradually increase the width from the inside toward the outside in the perpendicular-to-axis broaching direction. In the bush 1 according to the present embodiment, the convex part 2a protrudes outward from the innermost of the broached part 5 (the innermost of the hole part 5b in the perpendicular-to-axis broaching direction in this example) in the perpendicular-to-axis broaching direction. At least part of the convex part 2a (part of circled area A in the illustrated example) is located adjacent to the elastic body 4. In this example, at least part of the convex part 2a (part of circled area A in the drawing) touches the elastic body 4. Meanwhile, at least part of the convex part 2a may not touch the elastic body 4 and may be located adjacent to it to such an extent as to come into contact during use.

In the bush 1 according to the present embodiment, the inner cylinder 2 includes the convex part 2a that protrudes in the perpendicular-to-axis broaching direction. At least part of the convex part 2a (part of circled area A in the illustrated example) can be located adjacent to the elastic body 4. In this case, even if a large input is applied in the perpendicular-to-axis solid direction, the displacement of at least part of the convex part 2a compressively deforms the elastic body 4 through the location in contact with the elastic body 4. This makes it possible to alleviate the input and suppress the displacement in the perpendicular-to-axis solid direction. The convex part 2a protrudes outward in the perpendicular-to-axis broaching direction from the innermost of the perpendicular-to-axis broaching direction of the broached part 5, making it possible to effectively exert the above-described effect while sufficiently ensuring the protruding width. This technique requires almost no change to the shape of the elastic body 4, making it possible to suppress an effect on the ratio of the spring characteristics in the perpendicular-to-axis solid direction to the spring characteristics in the perpendicular-to-axis broaching direction. Designs for the shape of the convex part 2a can also adjust the timing of suppressing displacement in the perpendicular-to-axis solid direction.

It would be also advantageous that the convex part 2a is shaped to gradually increase the width from the inside to the outside in the perpendicular-to-axis broaching direction. A large input, if applied in the perpendicular-to-axis solid direction, displaces the convex part 2a, making it possible to accelerate the timing of compressively deforming the elastic body 4. The convex part 2a can be shaped variously, making it possible to adjust the timing of suppressing the displacement in the perpendicular-to-axis solid direction.

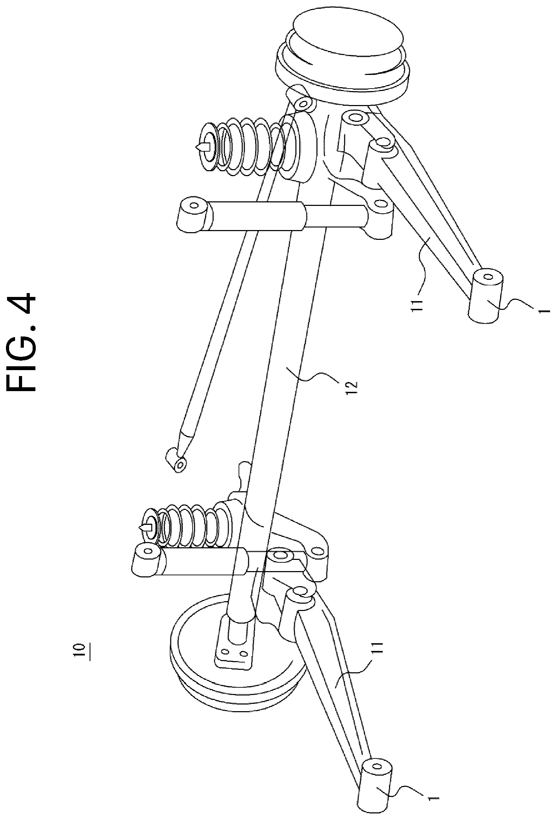

FIG. 4 is a diagram illustrating an application example of the bush. As illustrated in FIG. 4, the bush 1 according to the above-described embodiments can be applied to a suspension device 10. The suspension device 10 includes a pair of right and left trailing arms 11 to which tires are attached; a torsion bar 12 that connects the pair of right and left trailing arms 11; and the bush 1 that connects the trailing arms 11 to a vehicle body.

The above describes the embodiments of the present invention, but the invention is not limited to the above embodiments. The following describes embodiments of the present invention, but the invention is not limited to the following embodiments.

### Embodiment

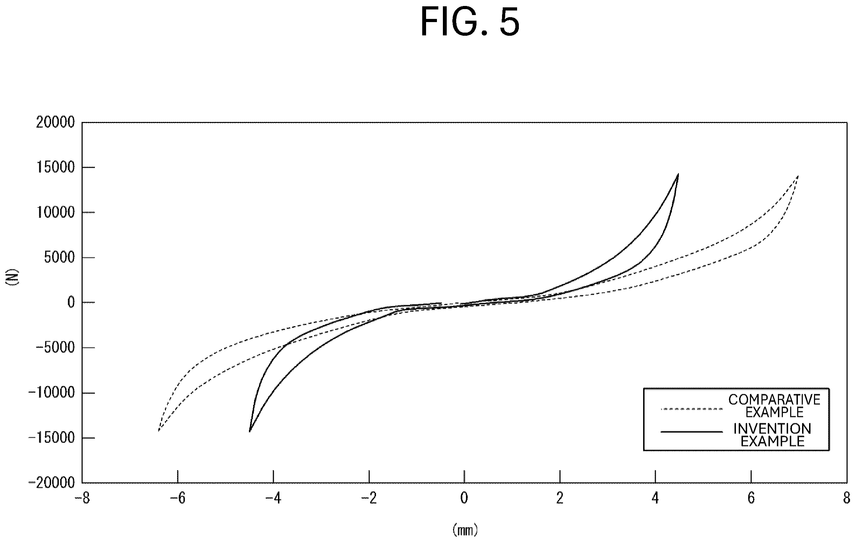

To confirm the effect of the present invention, the bushes are prototyped according to an invention example, as illustrated in FIG. 1, in which a plate is placed between the outer cylinder and the broached part in the perpendicular-to-axis broaching direction; and a comparative example in which no plate is placed. Distortions are measured in the perpendicular-to-axis broaching direction while applying a load in the perpendicular-to-axis broaching direction. The evaluation result is shown in FIG. 5.

As illustrated in FIG. 5, the invention example suppresses the displacement in the perpendicular-to-axis broaching direction compared to the comparative example. It can conclude that it is possible to reduce the shock caused by input in the perpendicular-to-axis broaching direction and prevent the generation of abnormal noise between metals due to the wear of the elastic body.

### List of Reference Signs

1: bush, 2: inner cylinder, 3: outer cylinder, 4: elastic body, 5: broached part, 6: plate, 10: suspension device, 11: trailing arm, 12: torsion bar

## Claims

1. A bush comprising:
an outer cylinder;
an inner cylinder; and
an elastic body placed between the outer cylinder and the inner cylinder,
wherein the elastic body includes a broached part penetrating in an axial direction;
wherein a plate is placed between the outer cylinder and the broached part in a perpendicular-to-axis broaching direction; and wherein part of the elastic body is located between the outer cylinder and the plate.

2. The bush according to claim 1,
wherein the elastic body is made of rubber.
